# EUROPÄISCHE PATENTSCHRIFT

(11) **EP 2 997 256 B1**
(45) Veröffentlichungstag und Bekanntmachung des Hinweises auf die Patenterteilung: **27.02.2019**
(21) Anmeldenummer: 14723067.6
(22) Anmeldetag: 08.05.2014
(51) Int. Cl.: F03D 80/30, F03D 1/06, F03D 80/80

(54) **WINDENERGIEANLAGE UND BLITZSCHUTZEINHEIT FÜR EINE WINDENERGIEANLAGE**
WIND TURBINE AND A LIGHTNING PROTECTION UNIT FOR A WIND TURBINE
ÉOLIENNE ET MODULE DE PROTECTION CONTRE LA FOUDRE POUR ÉOLIENNE

(30) Priorität: 14.05.2013 DE 102013208792
(43) Veröffentlichungstag der Anmeldung: 23.03.2016
(73) Patentinhaber: Wobben Properties GmbH, 26607 Aurich (DE)
(72) Erfinder: EDEN, Georg, 26556 Westerholt (DE); SATORIUS, Florian, 26789 Leer (DE)
(74) Vertreter: Eisenführ Speiser
(86) Internationale Anmeldenummer: PCT/EP2014/059503
(87) Internationale Veröffentlichungsnummer: WO 2014/184094

(56) Entgegenhaltungen:
- EP-A2- 1 788 241
- DE-A1-102004 022 299
- US-A1- 2012 039 011

## Beschreibung

Die vorliegende Erfindung betrifft eine Windenergieanlage und eine Blitzschutzeinheit für eine Windenergieanlage.

Eine Aufstellung von Windenergieanlagen in freiem Gelände und auch bei großer Bauhöhe führt unweigerlich dazu, dass das Risiko eines Blitzeinschlages vorhanden ist.

DE 44 36 197 C2 zeigt eine Windenergieanlage mit einer Blitzschutzeinrichtung. Um einen Blitz sicher ableiten zu können, wird im Wurzelblatt-nahen Bereich des Rotorblattes ein Aluminiumring aus einem leitenden Material vorgesehen. An einem feststehenden Teil der Gondel ist eine Fangstange vorgesehen, welche in einem vorbestimmten Abstand zu den Metallringen angeordnet ist. Wenn ein Blitz einschlägt, dann kann der Blitz die Funkenstrecke zwischen dem Ring und der Fangstange überwinden und somit abgeleitet werden.

EP 1 561 030 B1 zeigt ebenfalls eine Blitzschutzeinrichtung für eine Windenergieanlage. Hierbei wird ebenfalls ein leitender Ring im Wurzelblatt-nahen Bereich des Rotorblattes vorgesehen. Parallel zu einer Funkenstrecke wird eine Gleitkontaktverbindung vorgesehen.

US20120039011 zeigt ebenfalls eine Blitzschutzeinrichtung für eine Windenergieanlage. Um einen Blitz ableiten zu können, wird eine Blitzfangstange mit zwei Rollen auf einen Abstand dem Ring des Rottorblatts gehalten.

DE 10 2009 017 824 A1 zeigt eine Übertragungsvorrichtung zum Übertragen von elektrostatischer Energie und Blitzstrom zwischen einer Rotorwelle und einer nicht rotierenden Erdungsvorrichtung. Die Übertragungsvorrichtung weist eine Schleifkontaktvorrichtung, eine Elektrode zum Übertragen von Blitzstrom und zwei Rollen auf.

Es ist eine Aufgabe der vorliegenden Erfindung, eine Windenergieanlage vorzusehen, welche eine verbesserte Blitzschutzeinrichtung aufweist.

Diese Aufgabe wird durch eine Windenergieanlage nach Anspruch 1 gelöst.

Somit wird eine Windenergieanlage mit einer Gondel und einem Rotor vorgesehen, welcher mindestens zwei Rotorblätter aufweist. Die Rotorblätter weisen jeweils mindestens einen metallischen Leiter zum Leiten eines eingeschlagenen Blitzes und einen damit verbundenen leitenden Ring im Bereich einer Rotorblattwurzel auf. Ferner ist eine Blitzschutzeinheit an dem nicht drehenden Teil der Gondel derart befestigt, dass die Blitzschutzeinheit auf dem Ring an dem Rotorblatt aufliegt. Die Blitzschutzeinheit weist zwei nicht leitende Rollen und eine Blitzfangstange auf, wobei ein freies Ende der Blitzfangstange einen Abstand zu einem äußeren Ende der Rollen aufweist, der eine Funkenstrecke definiert. Somit liegen lediglich die Rollen der Blitzschutzeinheit an dem Ring an.

Gemäß einem Aspekt der vorliegenden Erfindung weist die Blitzschutzeinheit eine Wippeneinheit auf, welche über ein federndes Blech an einem nicht drehenden Teil der Gondel befestigt ist.

Die vorliegende Erfindung betrifft den Gedanken, anstelle einer Fangstange eine Blitzschutzeinrichtung vorzusehen, welche zu jedem Zeitpunkt einen definierten Abstand zwischen einem leitenden Ring in dem Wurzelblatt-nahen Bereich des Rotorblattes und einem Blitzableiter vorzusehen. Dies wird erfindungsgemäß dadurch erreicht, dass die Blitzschutzeinrichtung eine Wippe mit zwei Rollen aus einem nicht leitenden Material aufweist, wobei die Rollen in Kontakt stehen mit dem leitenden Ring im Wurzelblatt-nahen Bereich des Rotorblattes. Somit kann durch den Abstand des Blitzableiters und den Rollen ein definierter Abstand zwischen Blitzableiter und dem nicht leitenden Ring auf dem Rotorblatt eingestellt werden. Damit kann auch für Rotorblätter, welche unrund sind, ein definierter Abstand zwischen dem leitenden Ring und einer Fangstange (d. h. die Breite der Funkenstrecke) vorgesehen werden. Durch den definierten Abstand kann der Funkenabstand kleiner gewählt werden.

Gemäß einem Aspekt der vorliegenden Erfindung ist die erfindungsgemäße Blitzschutzeinrichtung nachrüstbar.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines Teils der Windenergieanlage gemäß einem ersten Ausführungsbeispiel, und
- Fig. 3: zeigt eine schematische Darstellung einer Blitzschutzeinrichtung gemäß dem ersten Ausführungsbeispiel.

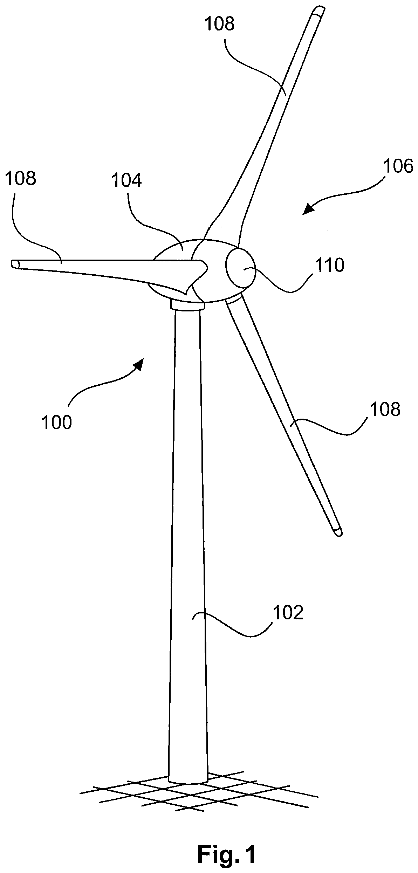

Fig. 1 zeigt eine schematische Darstellung einer Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 vorgesehen. Der Rotor 106 wird im Betrieb durch den Wind in eine Drehbewegung versetzt und dreht somit auch den Rotor oder Läufer des Generators in der Gondel 104. Der Pitchwinkel der Rotorblätter 108 kann durch Pitchmotoren an den Rotorblattwurzeln der jeweiligen Rotorblätter 108 verändert werden.

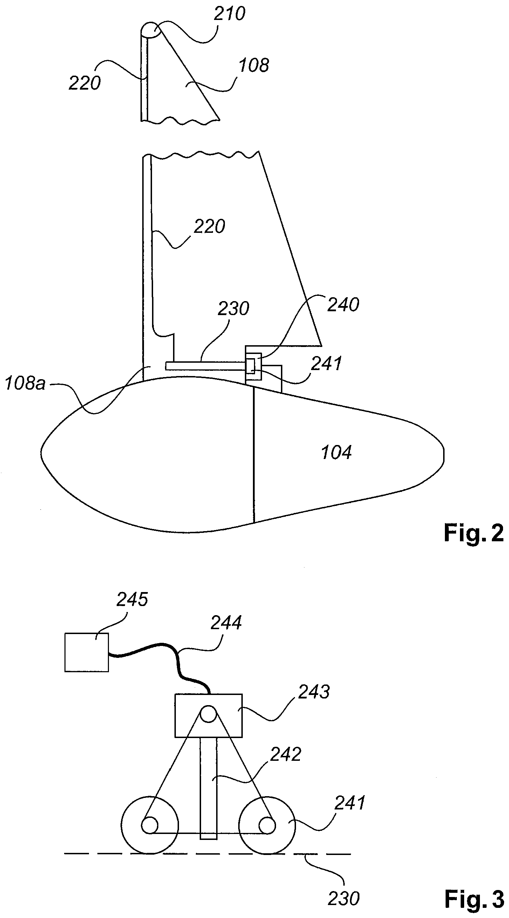

Fig. 2 zeigt eine schematische Darstellung eines Teils der Windenergieanlage gemäß einem ersten Ausführungsbeispiel. Das Rotorblatt 108 weist optional eine metallische Spitze 210 sowie mindestens einen metallischen Leiter 220 auf, welcher die Rotorblattspitze 210 mit einem metallischen Ring 230 verbindet. Der metallische Ring 230 ist im Rotorblattwurzelbereich 108a vorgesehen. Der Ring 230 kann das Rotorblatt 108 zumindest teilweise umfassen, so dass auch bei Änderung des Pitchwinkels des Rotorblattes 108 sichergestellt werden kann, dass der leitende Ring 230 in Kontakt steht mit der Blitzschutzeinheit 240. Die Blitzschutzeinheit 240 ist an dem feststehenden Teil der Gondel 104 befestigt und steht in Kontakt mit dem metallischen (leitenden) Ring 230.

Fig. 3 zeigt eine schematische Darstellung einer Blitzschutzeinrichtung gemäß dem ersten Ausführungsbeispiel. Die Blitzschutzeinrichtung 240 kann über ein federndes Blech 244 direkt oder mittelbar an einem feststehenden Teil 245 der Gondel 104 befestigt werden. An einem (freien) Ende des federnden Bleches 244 ist optional eine Wippeneinheit 243 vorgesehen, welche wiederum mit zwei beweglichen Rollen 241 verbunden ist. Zwischen den Rollen 241 ist ein Blitzfangstab 242 vorgesehen. Zwischen dem freien Ende des Blitzfangstabes 242 und den Enden der Rollen 241 ist ein vorab bestimmbarer oder einstellbarer Abstand vorhanden. Die Rollen 241 werden in Kontakt mit dem Ring 230 gebracht, so dass die Funkenstrecke zwischen dem Ring 230 und dem freien Ende des Blitzfangstabes 242 definiert wird. Da die Rollen 241 aufgrund des federnden Bleches 244 gegen den leitenden Ring 230 gedrückt werden, ist ein definierter Abstand (die Funkenstrecke) zwischen dem Ring 230 und der Blitzfangstange 242 vorhanden.

Die Rollen 241 sind vorzugsweise aus einem nicht leitenden Material wie beispielsweise Kunststoff oder Teflon ausgestaltet. Die Breite der Rollen 241 kann beispielsweise 20 cm betragen.

Durch das Vorsehen der Wippeneinheit 243, welche bezüglich des zweiten Endes des Blechs 244 verschwenkbar ist, kann sichergestellt werden, dass beide Rollen 241 zu jedem Zeitpunkt auf dem Ring 230 aufliegen.

Durch die erfindungsgemäße Blitzschutzeinheit, insbesondere durch die verschwenkbare Wippeneinheit, kann ein definierter Abstand zwischen der Blitzfangstange 242 und dem leitenden Ring 230 auch dann sichergestellt werden, wenn der Ring 230 oder das Rotorblatt 108 unrund ist.

## Patentansprüche

1. Windenergieanlage, mit
einer Gondel (104),
einem Rotor, der mindestens zwei Rotorblätter (108) aufweist, wobei die Rotorblätter (108) jeweils eine Rotorblattwurzel (108a), mindestens einen metallischen Leiter (220) zum Leiten eines eingeschlagenen Blitzes und einen damit verbundenen leitenden Ring (230) aufweisen, wobei der Ring (230) im Bereich der Rotorblattwurzel (108a) angeordnet ist,
wobei mindestens eine Blitzschutzeinheit (240) an dem nicht drehenden Teil der Gondel (104) derart befestigt ist, dass die mindestens eine Blitzschutzeinheit (240) auf dem Ring (230) an dem Rotorblatt (108) aufliegt, um einen in das Rotorblatt (108) einschlagenden Blitz abzuleiten,
wobei die Blitzschutzeinheit (240) zwei Rollen (241) und eine Blitzfangstange (242) aufweist, wobei nur die Rollen (241) auf dem Ring (230) aufliegen, wobei ein freies Ende der Blitzfangstange (242) einen Abstand zu einem äußeren Ende der Rollen (241) aufweist, der eine Funkenstrecke zwischen dem freien Ende der Blitzfangstange (242) und dem Ring (230) an dem Rotorblatt (108) definiert,
wobei die Rollen (241) elektrisch nicht-leitend ausgestaltet sind.

2. Windenergieanlage nach Anspruch 1, wobei
die Blitzschutzeinheit (240) eine Wippeneinheit (243) aufweist, welche über ein federndes Blech (244) an einem nicht drehenden Teil (245) der Gondel befestigt ist.

3. Windenergieanlage nach Anspruch 1 oder 2, wobei
der Abstand zwischen dem freien Ende der Blitzfangstange (242) und dem äußeren Ende der Rollen (241) einstellbar ist.

## Claims

1. Wind turbine, having
a nacelle (104),
a rotor, which has at least two rotor blades (108), the rotor blades (108) each having a rotor blade root (108a), at least one metallic conductor (220), for conducting a lightning strike, and a conducting ring (230) connected thereto, the ring (230) being disposed in the region of the rotor blade root (108a),
at least one lightning protection unit (240) being fastened to the non-rotating part of the nacelle (104) in such a manner that the at least one lightning protection unit (240) lies on the ring (230) on the rotor blade (108) in order to divert lightning striking the rotor blade (108),
the lightning protection unit (240) having two rollers (241) and a lightning rod (242), wherein only the rollers (241) are in contact with the ring (230), a free end of the lightning rod (242) being separated from an outer end of the rollers (241) by a distance that defines a spark gap between the free end of the lightning rod (242) and the ring (230) on the rotor blade (108),
wherein the rollers (241) are electrically non-conducting.

2. Wind turbine according to Claim 1,
the lightning protection unit (240) having a rocker unit (243) that is fastened to a non-rotating part (245) of the nacelle via a springing plate (244).

3. Wind turbine according to Claim 1 or 2,
the distance between the free end of the lightning rod (242) and the outer end of the rollers (241) being settable.

## Revendications

1. Éolienne, avec
une nacelle (104),
un rotor, qui présente au moins deux pales de rotor (108), dans laquelle les pales de rotor (108) présentent respectivement une racine de pale de rotor (108a), au moins un conducteur métallique (220) pour la conduction d'un impact de foudre et une bague conductrice (230) qui y est reliée, dans laquelle la bague (230) est agencée dans la zone de la racine de pale de rotor (108a),
dans laquelle au moins une unité de protection contre la foudre (240) est fixée à la partie non rotative de la nacelle (104) de telle sorte que l'au moins une unité de protection contre la foudre (240) repose sur la bague (230) au niveau de la pale de rotor (108) pour évacuer un impact de foudre dans la pale de rotor (108),
dans laquelle l'unité de protection contre la foudre (240) présente deux rouleaux (241) et un parafoudre (242), dans laquelle seuls les rouleaux (241) reposent sur la bague (230), dans laquelle une extrémité libre du parafoudre (242) présente une distance par rapport à une extrémité extérieure des rouleaux (241), qui définit un éclateur entre l'extrémité libre du parafoudre (242) et la bague (230) au niveau de la pale de rotor (108),
dans laquelle les rouleaux (241) sont conçus électriquement non conducteurs.

2. Éolienne selon la revendication 1, dans laquelle
l'unité de protection contre la foudre (240) présente une unité de bascule (243), qui est fixée par le biais d'une tôle ressort (244) au niveau d'une partie non rotative (245) de la nacelle.

3. Éolienne selon la revendication 1 ou 2, dans laquelle
la distance entre l'extrémité libre du parafoudre (242) et l'extrémité extérieure des rouleaux (241) est réglable.
